# FASCICULE DE BREVET EUROPEEN

(11) **EP 2 484 422 B1**
(45) Date de publication et mention de la délivrance du brevet: **08.01.2014**
(21) Numéro de dépôt: 11153561.3
(22) Date de dépôt: 07.02.2011
(51) Int. Cl.: B01D 29/11

(54) **Filtre**
Filter
Filter

(43) Date de publication de la demande: 08.08.2012
(73) Titulaire: Airwatec SA., 4700 Eupen (BE)
(72) Inventeur: PIRARD, Raphaël, 4837, BAELEN (BE)
(74) Mandataire: Coulon, Ludivine

(56) Documents cités:
- FR-A1- 2 034 090
- US-A- 4 544 387

## Description

La présente invention se rapporte à un filtre comprenant:
- une tête de filtre munie d'une entrée de fluide à filtrer et d'une sortie de fluide filtré,
- un corps de filtre, agencé pour être connecté à ladite tête de filtre,
- un élément de filtration physique agencé pour filtrer ledit fluide à filtrer et former ledit fluide filtré, comprenant une corbeille de support et un milieu filtrant, disposé sur ladite corbeille de support et replié et part et d'autre par-dessus les arrêtes de la dite corbeille de support, ledit élément de filtration étant agencé pour être contenu dans ledit corps de filtre et séparer ledit fluide à filtrer dudit fluide filtré, ledit élément de filtration comprenant un premier couvercle d'étanchéité et un deuxième couvercle d'étanchéité, agencés chacun pour étanchéifier l'intérieur de ladite corbeille de support de l'extérieur, et sertir ledit milieu filtrant sur ladite corbeille de support, au moins un desdits premier et deuxième couvercle d'étanchéité comprennent un orifice agencé pour recevoir une vis prévue pour assurer l'étanchéité dudit élément de filtration.

Un tel filtre est bien connu (voir FR2034090 ou US4544387), par exemple pour des applications industrielles, dans lesquelles le filtre, par exemple, à liquide se place en ligne sur une tuyauterie.

Malheureusement, ce type de filtre bien connu comporte certains inconvénients, notamment le fait que l'étanchéité entre la corbeille de support et le milieu filtrant est une étape délicate à réaliser, en particulier lorsque le milieu filtrant doit être remplacé et résiste mal aux coups de bélier. Les coups de bélier sont des phénomènes de choc qui apparaissent au moment de la variation brusque de la vitesse d'un liquide, par exemple, suite à une fermeture ou à une ouverture rapide d'une vanne, d'un robinet ou à l'arrêt d'une pompe. Ces chocs peuvent dans certains cas entraîner la rupture de la conduite dans les grosses installations, du fait de la quantité d'eau en mouvement ou des milieu filtrant dans les filtres se trouvant intercalés dans les canalisations.

L'invention a pour but de pallier les inconvénients de l'état de la technique en procurant un filtre dans lequel l'étanchéité est d'une part plus simple à effectuer entre l'élément de filtration et le corps de filtre (c'est-à-dire entre fluide à filtrer et fluide filtré), en particulier entre l'extérieur du milieu filtrant solidarisé à la corbeille de support et l'intérieur de celui-ci.

Pour résoudre ce problème, il est prévu suivant l'invention, un filtre tel qu'indiqué au début dans lequel ledit élément de filtration comprend en outre une buse centrale munie d'un pas de vis, complémentaire à un pas de vis de ladite vis, prévue pour être engagée complémentairement avec ladite buse centrale, en ce qu'au moins un desdits premier et deuxième couvercles d'étanchéité comprend une gorge périphérique dans laquelle un joint est surmoulé, et en ce que ladite corbeille de support est en matière plastique et comprend au moins un renfort interne, ledit au moins un renfort interne comprend au moins un renfort plan médian, par exemple deux renforts plans médians perpendiculaires l'un à l'autre, dans lequel est formé ou moulé ladite buse centrale.

De cette façon, une fois le milieu filtrant positionné sur ladite corbeille de support et replié par-dessus l'arrête de ladite corbeille de support, à chaque extrémité de la corbeille de support, il est ensuite engagé dans ladite gorge périphérique dudit couvercle d'étanchéité et une vis, passant par l'orifice centrale du couvercle susdit et engagée dans ladite buse centrale dudit élément de filtration est serrée de façon à comprimer le joint surmoulé contre l'arrête dudit élément de filtration, ce qui a pour résultat de sertir le milieu filtrant entre le couvercle d'étanchéité et la corbeille de support de manière simple et efficace.

En effet, précédemment, il y avait lieu de prendre beaucoup de précautions lorsqu'il s'agissait de coincer le milieu filtrant entre le couvercle d'étanchéité et la corbeille de support car un rabattage non soigné menait souvent à des fuites dues aux différentes épaisseurs dans l'espace entre la corbeille de support et le couvercle d'étanchéité provoquées par le repli du milieu filtrant. Selon l'invention, la présence du joint surmoulé dans la gorge permet de contrecarrer les différences d'épaisseurs, en coopération avec le serrage de la vis qui, quant à lui, applique une force sur le joint qui étanchéifie la connexion entre la corbeille de filtration et le couvercle d'étanchéité.

En conséquence, lorsqu'un coup de bélier se produit dans la canalisation dans laquelle est intercalé ledit filtre, le milieu filtrant ne se dégengage plus puisqu'il est parfaitement serti et maintenu en place par la vis et le joint tout en étant bien plus simple à positionner lors du montage du filtre dans la canalisation. L'étanchéité entre le fluide à filtrer et le fluide filtré (c'est-à-dire de part et d'autre du milieu filtrant) est donc assurée même en cas de coup de bélier où l'onde de pression inversée, fréquente dans les systèmes de canalisations, avait tendance dans les filtres de l'état de la technique antérieure à désengager les couvercles d'étanchéité de la corbeille de support.

En outre, ledit ou lesdits renforts internes de ladite corbeille de support permettent audit élément de filtration d'être plus rigide lorsqu'il y a présence de coups de bélier et rigidifient l'ensemble sans empêcher la perte de charge nécessaire à l'étape de filtration.

Dans une forme de réalisation particulière, lequel ladite corbeille de support est cylindrique.

De préférence, ladite corbeille de support comporte une paroi munie d'orifices, en particulier une paroi maillée.

De manière plus préférentielle, au moins un desdits premier et deuxième couvercles d'étanchéité est muni d'ailettes formant une hélice externe à ladite corbeille de support. Les ailettes permettent ainsi de diriger le fluide se trouvant à l'extérieur dudit élément de filtration confèrent ainsi à celui-ci un mouvement centrifuge, ce qui est particulièrement adapté lorsque ledit fluide à filtrer se trouve à l'extérieur dudit milieu filtrant et ledit fluide filtré se trouve à l'intérieur du milieu filtrant.

Avantageusement, ledit élément de filtration comprend:
- dans ladite buse centrale, un deuxième pas de vis,
- une deuxième vis munie d'un pas de vis complémentaire audit deuxième pas de vis de ladite buse centrale,
- un autre desdits premier et deuxième couvercles d'étanchéité comprenant éventuellement une gorge périphérique dans laquelle un joint est surmoulé et un orifice central agencé pour recevoir ladite vis, laquelle est prévue pour être engagée complémentairement avec ladite buse centrale et assurer l'étanchéité dudit élément de filtration.

Il est en effet prévu selon l'invention que élément de filtration comprenne deux couvercles d'étanchéité, munis chacun d'un orifice de passage pour la vis et d'une gorge périphérique pour engager l'arrête de la corbeille de support sur laquelle est rempliée le milieu filtrant. De cette façon, l'étanchéité est particulièrement optimale, puisqu'elle est effectuée de part et d'autre de la corbeille de support et donc de part et d'autre de l'élément de filtration, ce qui permet d'assurer la résistance aux coups de béliers des deux côtés de l'élément de filtration. La corbeille de support comprend au moins un renfort interne avec un ou plusieurs renforts plans médians. Ladite buse centrale sera formée ou moulée dans le renfort plan médian, et si plusieurs renforts médians sont présents, la buse centrale comprenant le pas de vis, par exemple, à l'extrémité de celle-ci, sera formée par ou moulée dans la jointure entre les différents éléments de renfort plans médians.

Dans une variante selon l'invention, ledit élément de filtration comprend
- une autre buse centrale munie d'un deuxième pas de vis,
- une deuxième vis munie d'un pas de vis complémentaire audit deuxième pas de vis de ladite buse centrale
- un autre desdits premier et deuxième couvercles d'étanchéité comprenant éventuellement une gorge périphérique dans laquelle un joint est surmoulé et un orifice central agencé pour recevoir ladite vis, laquelle est prévue pour être engagée complémentairement avec ladite buse centrale et assurer l'étanchéité dudit élément de filtration.

Dans cette forme de réalisation avantageuse, particulièrement utile quand les renforts plans médians ne sont pas présents ou ne s'étendent pas sur toute la longueur de l'élément de filtration, une simple buse comprenant un pas de vis est positionnée de part et d'autre de la corbeille de filtration dans laquelle la vis peut être engagée pour serrer le couvercle sur la corbeille de support et sertir le milieu de filtration. La buse centrale peut être désolidarisée de la corbeille de support et simplement être engagée dans les orifices desdits couvercles d'étanchéités, étant entendu que les pas de vis peuvent être externe ou interne. Dans une variante, la buse centrale peut être solidarisée aux parois de la corbeille de support par des éléments ponctuels de renfort, par exemple transversaux.

De préférence ladite corbeille de support comprend au moins une première partie d'extrémité de corbeille et une deuxième partie d'extrémité de corbeille comprenant chacune d'un côté des moyens complémentaires de serrage pour engager lesdites première et deuxièmes parties d'extrémité de corbeille ensemble, directement ou indirectement et former ladite corbeille de support, éventuellement sous forme d'un cylindre unique.

Dans une variante selon l'invention, ladite corbeille de support comprend en outre une série de parties centrales de corbeille, munies à chaque extrémité de moyens complémentaires de serrage agencés pour engager lesdites première et deuxième parties d'extrémité de corbeille et lesdits parties centrales de corbeille ensemble et former ladite corbeille de support, éventuellement sous forme d'un cylindre unique.

En effet, dans certaines applications industrielles, des filtres d'une hauteur relativement conséquente sont généralement nécessaires, ce qui rend l'encombrement des éléments de filtration important.

De manière avantageuse, ladite entrée pour un fluide à filtrer communique avec l'extérieur dudit élément de filtration et ladite sortie pour un fluide filtré communique avec l'intérieur dudit élément de filtration.

De préférence, ledit couvercle d'étanchéité situé dans une partie supérieure dudit élément de filtration comprend au moins un orifice agencé pour connecter l'intérieur dudit élément de filtration avec ladite sortie pour un fluide filtré.

Dans une variante selon l'invention, ladite entrée pour un fluide à filtrer communique avec l'intérieur dudit élément de filtration et ladite sortie pour un fluide filtré communique avec l'extérieur dudit élément de filtration.

De préférence, ledit couvercle d'étanchéité situé dans une partie supérieure dudit élément de filtration comprend au moins un orifice agencé pour connecter l'intérieur dudit élément de filtration avec ladite entrée pour un fluide à filtrer ou pour connecter l'extérieur dudit élément de filtration avec ladite sortie pour un fluide filtré.

D'autres caractéristiques, détails et avantages de l'invention ressortiront de la description donnée ci-après, à titre non limitatif et en faisant référence aux dessins annexés.
La figure 1 est une vue éclatée d'un filtre selon l'invention dans une forme de réalisation particulièrement préférentielle.
La figure 2 est une vue en coupe du filtre préférentiel selon la figure 1.
La figure 3 est une vue en perspective de l'élément de filtration.

Sur les figures, les éléments identiques ou analogues portent les mêmes références.

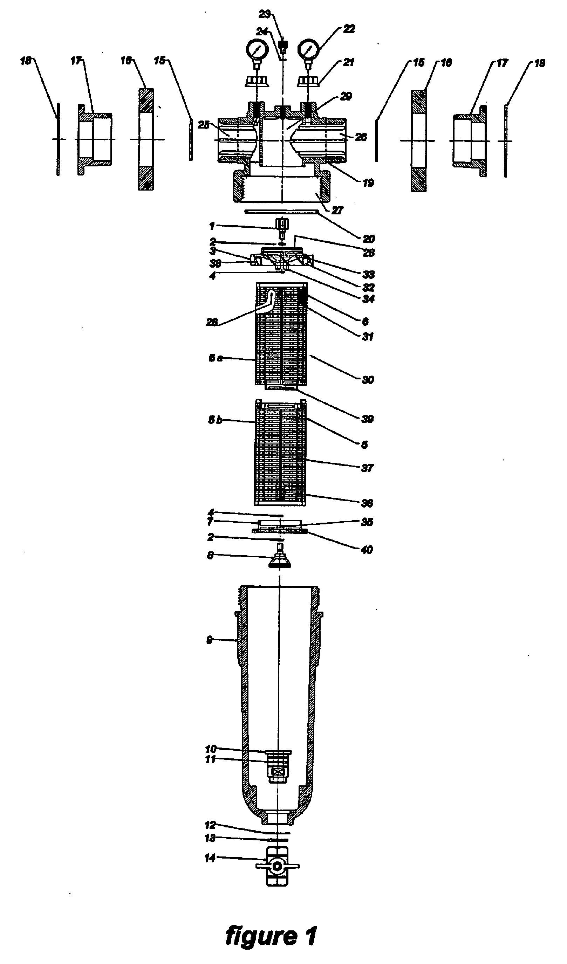

Comme on peut le voir à la figure 1, le filtre selon l'invention comprend une tête de filtre 19 munie d'une entrée de fluide à filtrer 25 et d'une sortie de fluide filtré 26. Dans cette forme de réalisation illustrée, l'entrée pour un fluide à filtrer relie une canalisation d'amenée d'un fluide à filtrer (non illustrée) à un passage circonférentiel 27.

Le filtre comprend également un corps de filtre 9 agencé pour être relié à la tête de filtre 19. Un élément de filtration 30 est prévu pour être logé dans le corps de filtre 9 et l'espace entre l'élément de filtration 30 et le corps de filtre 9 définit le passage circonférentiel 27.

Dans cette forme de réalisation préférentielle, l'entrée 25 pour un fluide à filtrer est reliée au passage circonférentiel 27 et la sortie 26 pour un fluide filtré est connectée à la partie interne de l'élément de filtration 30 puisque le fluide à filtrer traverse transversalement l'élément de filtration pour former le fluide filtré qui ressortira par la sortie 26, elle-même reliée à une canalisation de sortie (non illustrée). Bien entendu, le contraire peut également être réalisé. Dans ce cas, le fluide à filtrer entre par un orifice central dans la partie interne de l'élément de filtration et ressort au travers de l'élément de filtration dans le passage circonférentiel relié dans ce cas à la sortie pour fluide filtré.

Revenant à la forme de réalisation préférentielle illustrée à la figure 1, l'élément de filtration comprend une corbeille de support 5 et un milieu filtrant 6 disposé sur une face de la corbeille de support 5. Comme on l'a vu ci-dessus, l'élément de filtration sépare le fluide à filtrer du fluide filtré. En outre, l'élément de filtration 30 comprend un premier couvercle d'étanchéité 3 et un deuxième couvercle d'étanchéité 7. Ces couvercles 3 et 7 ont pour rôle d'étanchéifier l'intérieur de la corbeille de support 5 de l'élément de filtration 30 de l'extérieur de celle-ci (vers le passage circonférentiel 27) et de sertir le milieu filtrant 6 sur ladite corbeille de support 5, de préférence sur l'arrête de la corbeille de support 5.

Selon l'invention, l'élément de filtration comprend une base centrale 31 munie d'un pas de vis et une vis 1 munie d'un pas de vis complémentaire au pas de vis de la buse centrale 31.

Au moins un desdits premier 3 et deuxième couvercle d'étanchéité 7 comprend une gorge périphérique 32, 40 dans laquelle un joint 33 est surmoulé. Ce couvercle 3 ou 7 comprend un orifice central 34 agencé pour recevoir ladite vis 1 (éventuellement en présence d'un joint 2 circulaire).

La vis est prévue pour traverser l'orifice central 34 et pour engager complémentairement ladite buse centrale 31 de l'élément de filtration. Le couvercle d'étanchéité inférieur 7 comprend également un orifice central de passage d'une vis dans lequel passe une vis 8. L'élément de filtration comprend une autre buse centrale inférieure 36 munie d'un pas de vis complémentaire au pas de vis de ladite vis 8.

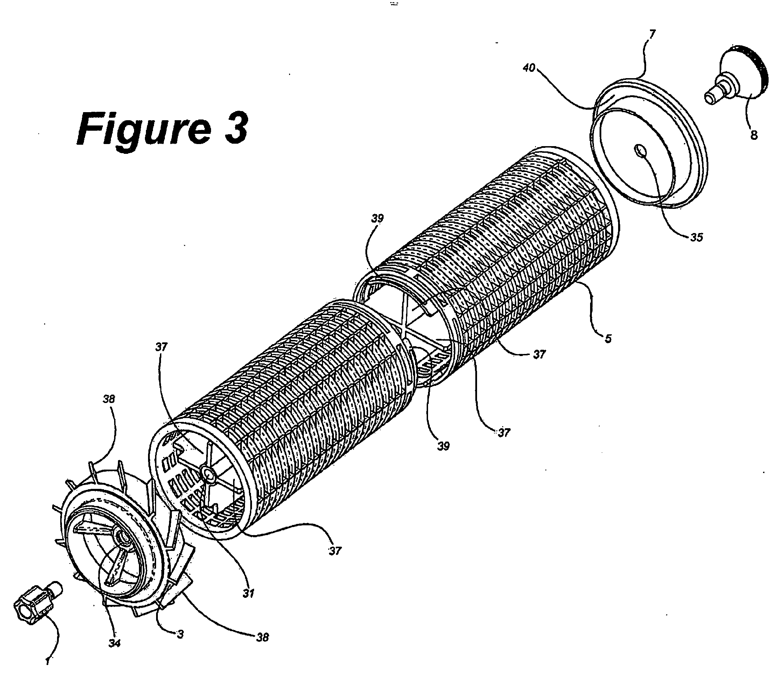

Dans une autre forme de réalisation, les 2 couvercles comprennent une gorge périphérique contenant un joint surmoulé (voir figure 3).

Dans une variante selon l'invention, la buse centrale est continue et comprend, à une première extrémité, un pas de vis complémentaire au pas de vis de la vis 1 et à l'autre extrémité un pas de vis complémentaire au pas de vis de la vis 8.

Bien entendu, dans cette description, le filtre est décrit comme s'il était placé verticalement dans un circuit de canalisation, mais l'invention entend également protéger l'application horizontale de ce filtre dans un circuit de canalisation.

Le milieu filtrant 6 est donc positionné sur la corbeille de support 5, par exemple, aux parois maillées et est replié au-delà des arêtes des parois de la corbeille de support. Dans la forme de réalisation illustrée, le couvercle d'étanchéité 7 est positionné contre l'arête inférieure de la corbeille de supports par-dessus laquelle le milieu filtrant est replié et la vis 8 est serrée, exerçant une pression sur la corbeille de support 5, en particulier sur l'arête, maintenant ainsi l'étanchéité entre l'intérieur de l'élément de filtration et l'extérieur de ce dernier. Un joint circulaire 2 permet de maintenir l'étanchéité au niveau de l'orifice central 35 du couvercle d'étanchéité inférieur 7. De préférence, la vis de fixation 8 est conique.

Le couvercle supérieur 3 est également positionné contre l'arrête supérieure de la corbeille de support 5 sur laquelle le milieu filtrant 6 ou vlies est replié. L'arrête supérieure est engagée dans la gorge périphérique 32, contre le joint 33, par exemple surmoulé. La vis 1 est serrée dans le pas de vis de la buse centrale 31 pour maintenir l'étanchéité entre le couvercle supérieur 3 et la corbeille de support 5 par pression du couvercle 3 sur la corbeille de support 5 par l'intermédiaire du joint 33.

Comme on peut le voir plus particulièrement à la figure 3, la corbeille de support 5 par exemple cylindrique, est en matière plastique et comprend au moins un renfort interne 37, en particulier au moins un renfort plan médian, par exemple deux renforts 37 plans médians perpendiculaires l'un à l'autre. La buse centrale 31, 36 peut être définie et moulée par exemple à l'intersection des renforts médians 37.

La corbeille présente avantageusement deux ou plusieurs parties. Dans cette forme de réalisation, la corbeille de support 5 comprend une première partie d'extrémité cylindrique 5a et une deuxième partie d'extrémité cylindrique 5b contenant chacune d'un côté des moyens complémentaire de serrage 39 pour engager lesdites première et deuxième parties 5a et 5b d'extrémité ensemble, directement ou indirectement c'est-à-dire par l'intermédiaire d'une ou de plusieurs parties centrales (munie alors à chaque extrémité moyens complémentaires de serrage agencées pour engager lesdites première et deuxième partie d'extrémité et lesdites parties centrales ensemble), pour former un cylindre unique, par exemple, formant ladite corbeille de support.

Comme on peut le voir dans chaque figure, le couvercle 3 comprend des ailettes externes 38 formant une hélice externe à ladite corbeille de support 5.

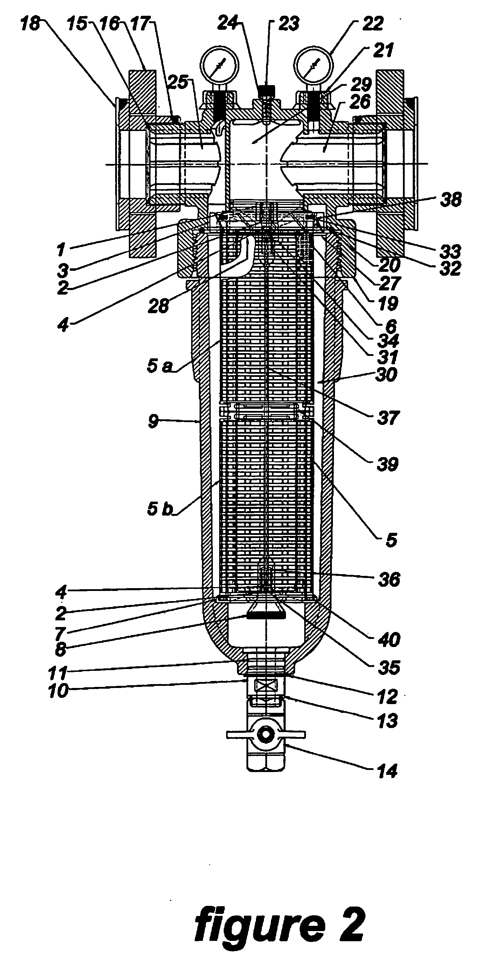

De plus, à la figure 1, on peut voir que la tête de filtre et le corps de filtre sont chacun munis d'une vis de purge 23 ou d'une vanne 10 et 14 permettant une dépressurisation du filtre et une évacuation du fluide du filtre, pour rendre le démontage de celui-ci plus facile en vue de la maintenance des éléments filtrant. Ces vis sont étanchéifiées à l'aide de joints 12, 13 et 24, circulaire, à fibre ou de type circlips en inox. En fonctionnement, le filtre est monté comme à la figure 2. Une canalisation d'entrée d'un fluide à filtré est donc reliée à l'entrée de fluide à filtrer 25 du filtre selon l'invention par exemple par le biais des éléments suivants en série : un joint plat 18, un manchon 17 de raccord, une bride 16 de serrage et d'un joint circulaire 15. Le fluide à filtrer, par exemple de l'eau entre dans l'entrée de fluide à filtrer 25 et pénètre dans le passage circonférentiel 27 entre le corps de filtre 9 et l'élément de filtration 30. La tête de filtre 19 est reliée au corps de filtre 9 par le biais d'un joint circulaire 20. Le fluide à filtrer traverse donc le milieu filtrant 6, positionné contre la corbeille de support 5, de l'extérieur vers l'intérieur. Les impuretés à éliminer restent dans le passage circonférentiel 27, tandis que le fluide ainsi filtré se trouve dans l'espace interne de l'élément de filtration 30, de l'autre coté du vlies ou du milieu filtrant 6. Il ressort ainsi, sous l'effet de la pression par l'orifice de sortie 28 entre la corbeille de support 6 et la tête de filtre 19, passe par le passage de sortie central 29 de la tête de filtre 19 qui communique avec la sortie de fluide filtré 26.

La sortie de fluide filtré 26 est reliée à une canalisation de sortie, par exemple par le biais des éléments suivants en série : un joint circulaire 15, une bride de serrage 16, un manchon de raccord 17 et un joint plat 18. La tête de filtre 19 comprend avantageusement en outre un écrou de fixation mural 21 ainsi qu'un manomètre à glycérine 22.

Il est bien entendu que la présente invention n'est en aucune façon limitée aux formes de réalisations décrites ci-dessus et que bien des modifications peuvent y être apportées sans sortir du cadre des revendications annexées.

### Liste des références :

- 1-: Vis de fixation du couvercle d'étanchéité
- 2-: joint circulaire
- 3-: Couvercle d'étanchéité à hélice externe
- 4-: Joint circulaire
- 5-: Corbeille de support
- 6-: VLIES ou milieu filtrant
- 7-: Deuxième couvercle inférieur
- 8-: Vis de fixation conique
- 9-: Corps de filtre
- 10-: Vanne de vidange (3/4 ou 1) première partie
- 11-: Joint circulaire
- 12-: Circlips
- 13-: Joint en fibre
- 14-: Deuxième partie de la vanne de vidange (¾ ou 1)
- 15-: Joint circulaire
- 16-: Bride de serrage
- 17-: Manchon de raccord
- 18-: Joint plat
- 19-: Tête de filtre
- 20-: Joint circulaire
- 21-: Ecrou de fixation murale
- 22-: Manomètre à glycérine
- 23-: Vis de purge
- 24-: Joint circulaire
- 25-: Entrée pour un fluide à filtrer
- 26-: Sortie de fluide filtré
- 27-: Passage circonférentiel
- 28-: Orifice de sortie entre corbeille et tête de filtre
- 29-: Passage de sortie central
- 30-: Elément de filtration
- 31-: Buse centrale supérieure
- 32-: Gorge périphérique
- 33-: Joint surmoulé
- 34-: Orifice central du couvercle 3
- 35-: Orifice central du couvercle 7
- 36-: Buse centrale inférieure
- 37-: Renforts médians
- 38-: Ailettes de l'hélice du couvercle 3
- 39-: Moyens de serrage de la première et deuxième parties d'extrémité de la corbeille de support
- 40-: Gorge périphérique

## Revendications

1. Filtre comprenant:
- une tête de filtre (19) munie d'une entrée de fluide à filtrer (25) et d'une sortie de fluide filtré (26),
- un corps de filtre (9), agencé pour être connecté à ladite tête de filtre (19),
- un élément de filtration physique agencé pour filtrer ledit fluide à filtrer et former ledit fluide filtré, comprenant une corbeille de support (5) et un milieu filtrant (6), disposé sur ladite corbeille de support (5) et replié et part et d'autre par-dessus les arrêtes de la dite corbeille de support, ledit élément de filtration étant agencé pour être contenu dans ledit corps de filtre (9) et séparer ledit fluide à filtrer dudit fluide filtré, ledit élément de filtration comprenant un premier couvercle d'étanchéité (3) et un deuxième couvercle d'étanchéité (7), agencés chacun pour étanchéifier l'intérieur de ladite corbeille de support (5) de l'extérieur, et sertir ledit milieu filtrant (6) sur ladite corbeille de support (5), au moins un desdits premier et deuxième couvercle d'étanchéité comprennent un orifice central (34) agencé pour recevoir une vis prévue pour assurer l'étanchéité dudit élément de filtration,
**caractérisé en ce que** ledit élément de filtration comprend en outre une buse centrale (31, 36) munie d'un pas de vis (1,8) complémentaire à un pas de vis de ladite vis, prévue pour être engagée complémentairement avec ladite buse centrale (31, 36), **en ce qu'**au moins un desdits premier (3) et deuxième couvercle d'étanchéité (7) comprend une gorge périphérique (32, 40) dans laquelle un joint (33) est surmoulé, et **en ce que** ladite corbeille de support (5) est en matière plastique et comprend au moins un renfort interne (37), ledit au moins un renfort interne comprend au moins un renfort plan médian (37), par exemple deux renforts plans médians (37) perpendiculaires l'un à l'autre, dans lequel est moulé ou formé ladite buse centrale.

2. Filtre selon la revendication 1, dans lequel ladite corbeille de support (5) est cylindrique.

3. Filtre selon l'une quelconque des revendications 1 à 2, dans lequel ladite corbeille de support (5) comporte une paroi munie d'orifices, en particulier une paroi maillée.

4. Filtre selon l'une quelconque des revendication à 3, dans lequel au moins un desdits premier et deuxième couvercles d'étanchéité (3, 7) est muni d'ailettes (38) formant une hélice externe à ladite corbeille de support (5).

5. Filtre selon l'une quelconque des revendications 1 à 4, dans lequel ledit élément de filtration comprend:
- dans ladite buse centrale (31, 36), un deuxième pas de vis
- une deuxième vis (1, 8) munie d'un pas de vis complémentaire audit deuxième pas de vis de ladite buse centrale (31, 36),
- un autre desdits premier et deuxième couvercles d'étanchéité (3,7) comprenant un orifice central agencé pour recevoir ladite vis (1, 8), laquelle est prévue pour être engagée complémentairement avec ladite buse centrale (31, 36) et assurer l'étanchéité dudit élément de filtration.

6. Filtre selon l'une quelconque des revendications 1 à 4, dans lequel ledit élément de filtration comprend:
- une autre buse centrale (31, 36) munie d'un deuxième pas de vis,
- une deuxième vis (1, 8) munie d'un pas de vis complémentaire audit deuxième pas de vis de ladite buse centrale (31, 36),
- un autre desdits premier et deuxième couvercles d'étanchéité (3, 7) comprenant un orifice central agencé pour recevoir ladite vis (1, 8), laquelle est prévue pour être engagée complémentairement avec ladite buse centrale (31, 36) et assurer l'étanchéité dudit élément de filtration.

7. Filtre selon la revendication 5 ou 6, dans lequel ledit autre desdits premier et deuxième couvercle d'étanchéité (3, 7) comprend une gorge périphérique (32, 40) dans laquelle un joint est surmoulé (33).

8. Filtre selon l'une quelconque des revendications 1 à 7, dans lequel ladite corbeille de support (5) comprend au moins une première partie d'extrémité de corbeille (5a) et une deuxième partie d'extrémité de corbeille (5b) comprenant chacune d'un côté des moyens complémentaires de serrage (39) pour engager lesdites première et deuxième parties d'extrémité de corbeille (5a, 5b) ensemble, directement ou indirectement et former ladite corbeille de support (5).

9. Filtre selon la revendication 8, dans lequel ladite corbeille de support comprend en outre une série de parties centrales de corbeille, munies à chaque extrémité de moyens complémentaires de serrage agencés pour engager lesdites première (5a) et deuxième parties d'extrémité de corbeille (5b) et lesdites parties centrales cylindriques ensemble et former ladite corbeille de support (5).

10. Filtre selon l'une quelconque des revendications 1 à 9, dans lequel ladite entrée (8) pour un fluide à filtrer (25) communique avec l'extérieur dudit élément de filtration et ladite sortie pour un fluide filtré (26) communique avec l'intérieur dudit élément de filtration.

11. Filtre selon l'une quelconque des revendications 1 à 9, dans lequel ladite entrée pour un fluide à filtrer (25) communique avec l'intérieur dudit élément de filtration et ladite sortie pour un fluide filtré (26) communique avec l'extérieur dudit élément de filtration.

12. Filtre selon la revendication 10, dans lequel ledit couvercle d'étanchéité (3) situé dans une partie supérieure dudit élément de filtration comprend au moins un orifice (28) agencé pour connecter l'intérieur dudit élément de filtration avec ladite sortie pour un fluide filtré (26).

13. Filtre selon la revendication 11, dans lequel ledit couvercle d'étanchéité (3) situé dans une partie supérieure dudit élément de filtration comprend au moins un orifice agencé pour connecter l'extérieur dudit élément de filtration avec ladite sortie pour un fluide filtré (26).

## Patentansprüche

1. Filter, umfassend:
- einen Filterkopf (19), der mit einem Eingang (25) für das zu filternde Fluid und einem Ausgang (26) für das gefilterte Fluid versehen ist,
- einen Filterkörper (9), der derart vorgesehen ist, dass er an den Filterkopf (19) angeschlossen wird,
- ein physisches Filterelement, das derart angeordnet ist, dass es das zu filternde Fluid filtert und das gefilterte Fluid bildet, umfassend einen Stützkorb (5) und ein Filtermedium (6), das auf dem Stützkorb (5) angeordnet und beiderseits über den kanten des Stützkorbs umgeklappt ist, wobei das Filterelement derart angeordnet ist, dass es in dem Filterkörper (9) enthalten ist und das zu filternde Fluid von dem gefilterten Fluid trennt, wobei das Filterelement einen ersten Abdichtungsdeckel (3) und einen zweiten Abdichtungsdeckel (7) umfasst, die jeweils dazu vorgesehen sind, das Innere des Stützkorbs (5) nach außen abzudichten und das Filtermedium (6) auf den Stützkorb (5) zu drücken, wobei mindestens einer der ersten und zweiten Abdichtungsdeckel eine zentrale Öffnung (34) umfasst, die derart angeordnet ist, dass sie eine Schraube aufnimmt, die dazu vorgesehen ist, die Abdichtung des Filterelements zu gewährleisten,
**dadurch gekennzeichnet, dass** das Filterelement ferner eine zentrale Düse (31, 36) umfasst, die mit einem Schraubengang (1, 8) komplementär zu einem Schraubengang der Schraube, die dazu vorgesehen ist, komplementär mit der zentralen Düse (31, 36) in Eingriff zu stehen, versehen ist, dass mindestens einer der ersten (3) und zweiten Abdichtungsdeckel (7) eine Umfangsrille (32, 40) umfasst, in der eine Dichtung (33) aufgeformt ist, und dass der Stützkorb (5) aus Kunststoff ist und mindestens eine innere Verstärkung (37) umfasst, wobei diese mindestens eine innere Verstärkung mindestens eine flache Mittelverstärkung (37), beispielsweise zwei aufeinander senkrechte flache Mittelverstärkungen (37) umfasst, in der die zentrale Düse durch Formguss geformt oder ausgebildet ist.

2. Filter nach Anspruch 1, bei dem der Stützkorb (5) zylindrisch ist.

3. Filter nach einem der Ansprüche 1 bis 2, bei dem der Stützkorb (5) eine Wand, die mit Öffnungen versehen ist, insbesondere eine Maschenwand, umfasst.

4. Filter nach einem der Ansprüche 1 bis 3, bi dem mindestens einer der ersten und zweiten Abdichtungsdeckel (3, 7) mit Flügeln (38) versehen ist, die eine Spirale außerhalb des Stützkorbs (5) bilden.

5. Filter nach einem der Ansprüche 1 bis 4, bei dem das Filterelement umfasst:
- in der zentralen Düse (31, 36) einen zweiten Schraubengang,
- eine zweite Schraube (1, 8), die mit einem Schraubengang komplementär zum zweiten Schraubengang der zentralen Düse (31, 36) versehen ist,
- einen weiteren der ersten und zweiten Abdichtungsdeckel (3, 7), umfassend eine zentrale Öffnung, die derart angeordnet ist, dass sie die Schraube (1, 8) aufnimmt, die dazu vorgesehen ist, komplementär mit der zentralen Düse (31, 36) in Eingriff zu stehen und die Abdichtung des Filterelements zu gewährleisten.

6. Filter nach einem der Ansprüche 1 bis 4, bei dem das Filterelement umfasst:
- eine weitere zentrale Düse (31, 36), die mit einem zweiten Schraubengang versehen ist,
- eine zweite Schraube (1, 8), die mit einem Schraubengang komplementär zum zweiten Schraubengang der zentralen Düse (31, 36) versehen ist,
- einen weiteren der ersten und zweiten Abdichtungsdeckel (3, 7), umfassend eine zentrale Öffnung, die derart angeordnet ist, dass sie die Schraube (1, 8) aufnimmt, die dazu vorgesehen ist, komplementär mit der zentralen Düse (31, 36) in Eingriff zu stehen und die Abdichtung des Filterelements zu gewährleistet,

7. Filter nach Anspruch 5 oder 6, bei dem der weitere der ersten und zweiten Abdichtungsdeckel (3, 7) eine Umfangsrille (32, 40) umfasst, in der eine Dichtung (33) aufgeformt ist.

8. Filter nach einem der Ansprüche 1 bis 7, bei dem der Stützkorb (5) mindestens einen ersten Korbendteil (5a) und einen zweiten Korbendteil (5b) aufweist, umfassend jeweils auf einer Seite komplementäre Klemmmittel (39), um den ersten und den zweiten Korbendteil (5a, 5b) miteinander direkt oder indirekt in Eingriff zu bringen und den Stützkorb (5) zu bilden.

9. Filter nach Anspruch 8, bei dem der Stützkorb ferner eine Reihe von zentralen Korbteilen umfasst, die an jedem Ende mit komplementären Klemmmitteln versehen sind, die derart angeordnet sind, dass sie den ersten (5a) und den zweiten Korbendteil (5b) und die zylindrischen zentralen Teile zusammen in Eingriff bringen und den Stützkorb (5) bilden.

10. Filter nach einem der Ansprüche 1 bis 9, bei dem der Eingang (8) für ein zu filterndes Fluid (25) mit dem Äußeren des Filterelements und der Ausgang für ein gefiltertes Fluid (26) mit dem Inneren des Filterelements in Verbindung steht.

11. Filter nach einem der Ansprüche 1 bis 9, bei dem der Eingang für ein zu filterndes Fluid (25) mit dem Inneren des Filterelements und der Ausgang für ein gefiltertes Fluid (26) mit dem Äußeren des Filterelements in Verbindung steht.

12. Filter nach Anspruch 10, bei dem der Abdichtungsdeckel (3), der sich in einem oberen Teil des Filterelements befindet, mindestens eine Öffnung (28) umfasst, die derart angeordnet ist, dass sie das Innere des Filterelements mit dem Ausgang für ein gefiltertes Fluid (26) verbindet.

13. Filter nach Anspruch 11, bei dem der Abdichtungsdeckel (3), der sich in einem oberen Teil des Filterelements befindet, mindestens eine Öffnung umfasst, um das Äußere des Filterelements mit dem Ausgang für ein gefiltertes Fluid (26) zu verbinden.

## Claims

1. A filter, comprising:
- a filter head (19) provided with an inlet for fluid to be filtered (25) and a filtered fluid outlet (26),
- a filter body (9), arranged to be connected to said filter head (19),
- a physical filtration element arranged to filter said fluid to be filtered and form said filtered fluid, comprising a support basket (5) and a filtering medium (6), positioned on said support basket (5) and folded on either side above the edges of said support basket, said filtering element being arranged to be contained in said filter body (9) and to separate said fluid to be filtered from said filtered fluid, said filtration element comprising a first sealing lid (3) and a second sealing lid (7), each arranged to seal the inside of said support basket (5) from the outside, and to crimp said filtering medium (6) on said support basket (5), at least one of said first and second sealing lids comprising a central orifice (34) arranged to receive a screw provided to ensure sealing of said filtration element,
**characterized in that** said filtration element further comprises a central nozzle (31, 36) provided with a screw pitch (1, 8) complementary to the screw pitch of said screw, provided to be engaged in a complementary manner with said central nozzle (31, 36), **in that** at least one of said first (3) and second sealing lids (7) comprises a peripheral groove (32, 40) in which a seal (33) is overmolded, and **in that** said support basket (5) is made from plastic and comprises at least one inner reinforcement (37), said at least one inner reinforcement comprises at least one planar metal reinforcement (37), for example two middle planar reinforcements (37) perpendicular to each other, in which said central nozzle is molded or formed.

2. The filter according to claim 1, wherein said support basket (5) is cylindrical.

3. The filter according to any one of claims 1 to 2, wherein said support basket (5) includes a wall provided with orifices, in particular a mesh wall,

4. The filter according to any one of claims 1 to 3, wherein at least one of said first and second sealing lids (3, 7) is provided with fins (38) forming a helix outside said support basket (5).

5. The filter according to any one of claims 1 to 4, wherein said filtration element comprises:
- in said central nozzle (31, 36), a second screw pitch,
- a second screw (1, 8) provided with a screw pitch complementary to said second screw pitch of said central nozzle (31, 36),
- another of said first and second sealing lids (3, 7) comprising a central orifice arranged to receive said screw (1, 8), which is provided to be engaged in a complementary manner with said central nozzle (31, 36) and to seal said filtration element.

6. The filter according to any one of claims 1 to 4, wherein said filtration element comprises:
- another central nozzle (31, 36) provided with a second screw pitch,
- a second screw (1, 8) provided with a screw pitch complementary to said second screw pitch of said central nozzle (31, 36),
- another of said first and second sealing lids (3, 7) comprising a central orifice arranged to receive said screw (1, 8), which is provided to be engaged in a complementary manner with said central nozzle (31, 36) and to ensure sealing of said filtration element.

7. The filter according to claim 5 or 6, wherein said other of the first and second sealing lids (3, 7) comprises a peripheral groove (32, 40) in which a seal is overmolded (33).

8. The filter according to any one of claims 1 to 7, wherein said support basket (5) comprises at least one first basket end part (5a) and one second basket end part (5b) each comprising complementary tightening means (39) on one side for engaging said first and second basket end parts (5a, 5b) together, directly or indirectly, and forming said support basket (5).

9. The filter according to claim 8, wherein said support basket further comprises a series of central basket parts, provided at each end with complementary tightening means arranged to engage said first (5a) and second (5b) basket end parts and said cylindrical central parts together and to form said support basket (5).

10. The filter according to any one of claims 1 to 9, wherein said inlet (8) for a fluid to be filtered (25) communicates with the outside of said filtration element and said filtered fluid outlet (26) communicates with the inside of said filtration element.

11. The filter according to any one of claims 1 to 9, wherein said inlet for a fluid to be filtered (25) communicates with the inside of said filtration element and the filtered fluid outlet (26) communicates with the outside of said filtration element.

12. The filter according to claim 10, wherein said sealing lid (3) situated in an upper part of said filtration element comprises at least one orifice (28) arranged to connect the inside of said filtration element with said outlet for a filtered fluid (26).

13. The filter according to claim 11, wherein said sealing lid (3) situated in an upper part of said filtration element comprises at least one orifice arranged to connect the outside of said filtration element with said filtered fluid outlet (26).
